# EUROPÄISCHE PATENTANMELDUNG

(11) **EP 2 717 438 A2**
(43) Veröffentlichungstag der Anmeldung: **09.04.2014**
(21) Anmeldenummer: 13183841.9
(22) Anmeldetag: 11.09.2013
(51) Int. Cl.: H02K 5/20

(54) **Gehäuse mit einer Kühlmittelführung für eine elektrische Maschine**

(30) Priorität: 05.10.2012 DE 102012218196
(71) Anmelder: ROBERT BOSCH GMBH, 70442 Stuttgart (DE)
(72) Erfinder: Grahlmann, Ivo, 31135 Hildesheim (DE); Kirchhoff, Karsten, 31196 Sehlem (DE)

(57) **Zusammenfassung**

Gehäuseelement (2) für eine elektrische Maschine für ein Fahrzeug, aufweisend ein Statorelement (4); und ein Gusselement (6); wobei das Statorelement (4) zumindest teilweise innerhalb des Gusselementes (6) angeordnet ist; dadurch gekennzeichnet, dass das Statorelement (4) formschlüssig und thermisch leitend mit dem Gusselement (6) verbunden ist; und wobei das Gusselement (6) eingerichtet ist mit einem Kühlmittel (30) kühlbar zu sein.

## Beschreibung

Die vorliegende Erfindung betrifft Generatortechnik in Fahrzeugen. Insbesondere betrifft die vorliegende Erfindung ein neuartiges Gehäusekonzept für eine elektrische Maschine. Weiter insbesondere betrifft die vorliegende Erfindung ein Gehäuseelement für eine elektrische Maschine, eine elektrische Maschine, aufweisend ein erfindungsgemäßes Gehäuseelement sowie ein Fahrzeug, insbesondere Automobil, aufweisend eine erfindungsgemäße elektrische Maschine oder ein erfindungsgemäßes Gehäuseelement.

### Stand der Technik

Bekannte elektrische Maschinen für Antriebs- oder Generatorapplikationen weisen prinzipbedingt einen Stator und einen Rotor auf, wobei sich der Rotor im Betrieb dreht, während der Stator im Wesentlichen unbeweglich ausgebildet ist. Je nach Betriebsmodus wird dabei der Rotor mechanisch mittels seiner Drehachse angeregt bzw. bewegt oder unter Verwendung des Stators aufgrund von durch Stromfluss induzierten Wechselmagnetfeldern in Rotation versetzt.

Hierzu weist ein Stator meist einen von Nuten durchzogenen Aufbau auf, in welchen Leiterelemente eingelegt sind, die durch Stromfluss ein geeignetes Magnetfeld zu erzeugen.

Aufgrund dieses Stromflusses wird eine elektrische Maschine im Betrieb regelmäßig signifikant erwärmt, so dass geeignete Vorrichtungen vorgesehen sein müssen, diese Wärme abzutransportieren. Hierzu weisen elektrische Maschinen meist eine geeignete Kühlvorrichtung zum Abtransport von Betriebswärme auf. Eine derartige Kühlvorrichtung ist beispielsweise unter Verwendung von geeigneten Kühlkanälen in einem geeigneten Element der elektrischen Maschine ausgeführt, durch welche ein Kühlmedium, beispielsweise ein Kühlfluid oder insbesondere Kühlwasser, geleitet werden kann.

Bei der Herstellung von Teilen derartiger Gehäuse elektrischer Maschinen muss somit bereits bei der Herstellung geeignet sichergestellt werden, dass geeignete Kanäle zur Aufnahme von Kühlmittel realisierbar sind.

Bekannte Gehäuse von flüssigkeitsgekühlten elektrischen Maschinen, beispielsweise für Hochvoltgeneratoren sowie für Hybrid- oder Elektroantriebe, werden meist einteilig im Sandguss oder Lost-Foam Verfahren hergestellt. Bei zweiteiligen Aluminiumgehäusen wird wiederum meist ein Innengehäuse sowie ein Außengehäuse vorgesehen, welche gegeneinander bzw. aufeinander geschoben und gedichtet werden, beispielsweise mit geeigneten Dichtelementen bzw. O-Ringen. Eine derartige Montage der Gehäusehälften findet dabei herkömmlich bei der Montage der elektrischen Maschine am Verwendungsort, beispielsweise in einem Fahrzeug, statt. Die Herstellung eines Kühlwassermantels im Gehäuse zur Kühlung und Aufnahme eines Stators bei der Montage der elektrischen Maschine im Fahrzeug stellt für das Gehäuse hohe Ansprüche an den Fertigungsprozess und verursacht hohe Kosten.

Bekannte Lösungen sind nur mit aufwendigen Gießverfahren zur Bildung des Kühlkanals herstellbar und erfordern eine umfangreiche mechanische Nachbearbeitung. Herkömmlich werden, wie zuvor beschrieben, die Gehäuseteile der elektrischen Maschine am Einsatzort im Fahrzeug verbaut und nachfolgend der Stator in der elektrischen Maschine montiert. Ein solches Statorpaket basiert herkömmlich auf gestanzten Lamellen, welche verschweißt und mit Kupferdraht umwickelt werden. Das bereits im Fahrzeug montierte Gehäuse wird nun erwärmt, das Statorpaket eingesetzt und durch Wiederabkühlen des Gehäuses durch einen Schrumpfungsprozess befestigt.

### Offenbarung der Erfindung

Ein Aspekt der vorliegenden Erfindung ist ein neuartiges Gehäusekonzept mit einer vereinfachten Konstruktion der elektrischen Maschine vor der eigentlichen Montage am Einsatzort bzw. im Fahrzeug.

Demgemäß wird ein Gehäuseelement für eine elektrische Maschine, eine elektrische Maschine, aufweisend ein erfindungsgemäßes Gehäuseelement, sowie ein Fahrzeug, insbesondere Automobil, weiter insbesondere Elektro- oder Hybridfahrzeug, aufweisend eine erfindungsgemäße elektrische Maschine bzw. ein erfindungsgemäßes Gehäuseelement gemäß den unabhängigen Ansprüchen angezeigt. Bevorzugte Ausgestaltungen ergeben sich aus den abhängigen Ansprüchen.

Erfindungsgemäß besteht ein Gehäuse für eine elektrische Maschine aus einem Mittelteil, welches die Statorkomponenten aufnimmt und insbesondere im Inneren das Rotorelement trägt, welches Mittelelement von zwei Lageschilden zur Lagerung der Rotorwelle ausgebildet ist. Die Lagerschilde werden hierbei auf den Stirnseiten des Mittelelementes bzw. des mittleren Gehäuseteils der elektrischen Maschine auf- bzw. angebracht und geeignet fixiert.

Eines der Lagerschilde weist dabei meist ein Loslager auf, während das andere Lagerschild meist ein Festlager zur Aufnahme des Rotors mit Rotorachse aufweist. Der mittlere Teil des Gehäuses ist erfindungsgemäß als ein Gehäuseelement ausgebildet, welches einerseits das Lamellenpaket des Stators aufnimmt und andererseits für ein Kühlmittel geeignet ausgebildet ist. Beispielsweise ist dieses Gehäuseelement als ein im Wesentlichen zylindrisches Element ausgebildet, welches im Inneren das Lamellenpaket bzw. das Statorelement aufnimmt. Eine formschlüssige Verbindung mit einem bevorzugten thermischen Kontakt von Statorelement und Gehäuseelement ermöglicht eine bevorzugte Wärmeableitung und einen geeigneten mechanischen Halt. Erfindungsgemäß wird nun ein Statorelement bzw. ein Lamellenpaket vorgesehen, an welchem ein Gusselement angebracht wird, welches Gusselement zumindest ein wesentlicher Bestandteil des Gehäuseelementes bzw. des mittleren Teils des Gehäuses der elektrischen Maschine darstellt.

Durch den direkten Verguss des Lamellenpaketes können insbesondere die Nachbearbeitungsprozesse nach Herstellung eines herkömmlichen Gehäuseteils in Form von Verschweißen der Lamellen und Einschrumpfen den hierdurch entstandenen Statorelementes entfallen. Das Gusselement kann dabei im Wesentlichen zylinderförmig ausgebildet sein, im Inneren das Statorelement bzw. das Lamellenpaket aufnehmen und im Außenbereich bereits geeignet durch das Gussverfahren geformt werden, um eine geeignete Kühlkanalgeometrie herzustellen. Ein Druckgussverfahren ermöglicht hierbei, sowohl Kühlkanalgeometrien auf der äußeren Oberseite des Gusselementes als auch im Inneren des Gusselementes vorzusehen, insbesondere wenn das Gusselement einstückig ausgeführt ist, da dann die Öffnungen eines Kühlkanals beidseitig in Entformungsrichtung des Druckgusswerkzeuges liegen. Durch den Giessprozess schrumpft das Aluminium beim Abkühlen auf das Lamellenpaket und erzeugt einen Formschluss, der zur Drehmomentübertragung benötigt wird. Eine Entwärmung des Lamellenpaktes wird durch die formschlüssige Verbindung der Aluminiumhülle und deren direkten Kontakt mit Kühlmittel verbessert und erhöht damit den Wirkungsgrad der elektrischen Maschine. Eine Funktionsintegration wird erreicht, da Lamellenpaket und Innengehäuse im Anlieferzustand ein Bauteil bilden, was sich auch vorteilhaft auf die Toleranzkette auswirkt.

Ein erfindungsgemäßes Statorelement bzw. Lamellenpaket kann aus einzelnen gestanzten Lamellen aufgebaut sein, welche in einem herkömmlichen Stanzverfahren mit einem Stanzwerkzeug einzeln hergestellt werden können. Nachfolgend wird eine Mehrzahl an derartig gestanzten Lamellen gestapelt und zumindest temporär miteinander verbunden. Eine derartige Verbindung kann beispielsweise durch Verprägen der einzelnen gestanzten Lamellen, das sogenannte Stanzpakettieren, erfolgen. Ein Verschweißen der Lamellen untereinander an deren Außenfläche ist damit nicht mehr notwendig.

Ein solches Statorelement bzw. Stanzpaket kann nun nachfolgend in eine geeignete Druckgussform eingelegt und mit geeignetem Material, beispielsweise Aluminium, derart umspritzt werden, so dass die Gusskontur den zuvor beschriebenen mittleren Teil des Gehäuses einer elektrischen Maschine ausbildet.

Das Gusselement kann dabei einschalig ausgebildet werden und im Inneren, insbesondere von Lagerschild zu Lagerschild verlaufende, Kühlkanalgeometrien aufweisen oder kann zweischalig ausgebildet sein und insbesondere in ein weiteres, im Wesentlichen zylinderförmiges Mantelelement einbringbar sein, wobei sich die Kühlkanalgeometrie großflächig an der Außenseite des Gusselementes und an der Innenseite des zylinderförmigen Mantelelementes ausbilden mag. Der Zwischenraum zwischen Gusselement und zylinderförmigem Mantelelement kann Strukturen aufweisen, die geeignet sind, eine verbesserte Leitung eines Kühlmediums um den vollen Umfang des Gusselementes zu ermöglichen. Beispielsweise können Rippen oder Stege vorgesehen sein, die derart angeordnet sind, dass sich das Kühlmedium mäanderförmig über die Oberfläche des Gusselementes bewegt. Gusselement und Mantelelement können gegeneinander unter Verwendung von Dichtelementen, beispielsweise O-Ringen, abgedichtet werden. Die Stirnseiten der beiden Elemente können nachfolgend wieder wie zuvor beschrieben durch geeignete Lagerschilde verschlossen werden, welche gleichfalls geeignete Dichtelemente aufweisen.

Ein Anschluss für ein Kühlmedium, beispielsweise ein Kühlwasseranschluss zum Fahrzeug, kann entweder an einem oder beiden Lagerschilden, an dem Gusselement selbst, insbesondere bei einschaliger Ausführung, sowie am zylindrischen Mantelelement bei zweischaliger Ausführung angebracht werden. Im Gießprozess sind auch geeignete Anschlusselemente, zum Beispiel integrierte Schlauchstutzen, herstellbar.

Die Lagerschilde können mit geeigneten Laschen bzw. Befestigungsvorrichtungen am mittleren Gehäuseteil des Gehäuses der elektrischen Maschine angebracht werden. Alternativ können die Lagerschilde mit Schrauben geeigneter Länge direkt miteinander verschraubt werden, wobei das mittlere Gehäuseteil bzw. das Statorgehäuse dann zwischen den Lagerschilden eingespannt gehaltert wird.

Ausführungsformen der Erfindung sind in den Zeichnungen dargestellt und in der nachfolgenden Beschreibung näher erläutert.

Es zeigen
- Fig. 1a,b: eine exemplarische Ausführungsform eines Gehäuseelementes gemäß der vorliegenden Erfindung;
- Fig. 2a,b: eine weitere exemplarische Ausführungsform eines Gehäuseelementes gemäß der vorliegenden Erfindung; und
- Fig. 3: eine exemplarische Darstellung eines vergossenen Lamellenpaketes als Rohling gemäß der vorliegenden Erfindung.

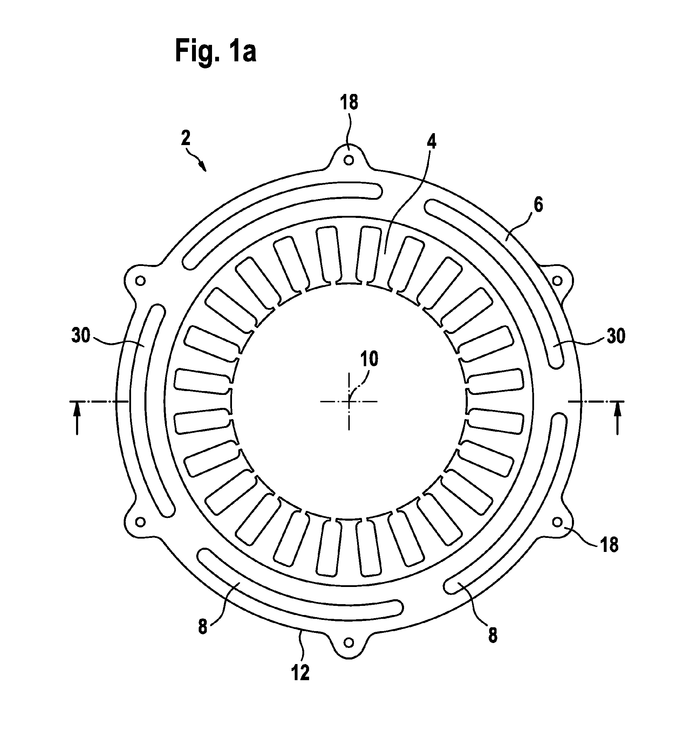

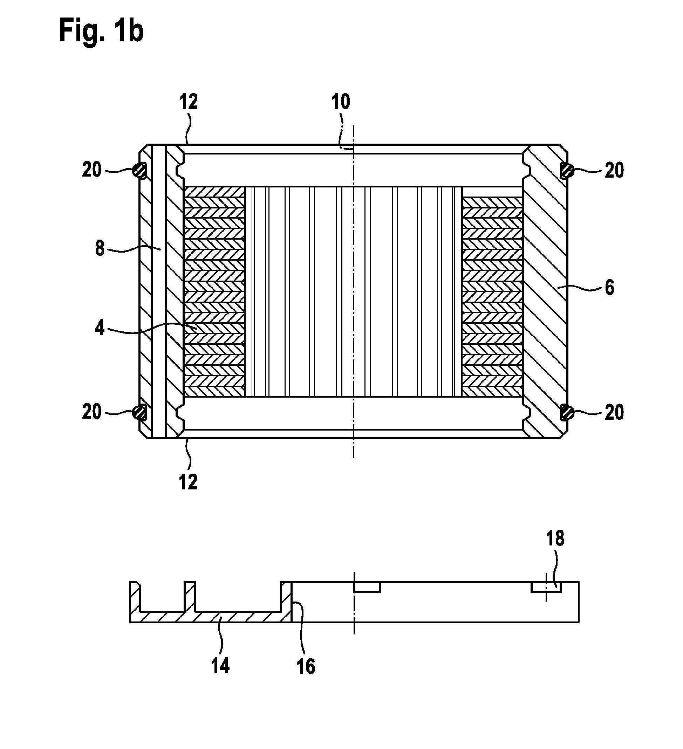

Weiter Bezug nehmend auf Figur 1a,b wird eine exemplarische Ausführungsform eines Gehäuseelementes gemäß der vorliegenden Erfindung dargestellt.

Die Figuren 1a,b zeigen hierbei eine einstückige bzw. einschalige Ausbildung des Gusselementes 6. Im Inneren des Gusselementes 6 sind Kühlgeometrien 8 bzw. Kühlkanäle vorgesehen, die eingerichtet sind, dass ein Kühlfluid, beispielsweise Kühlwasser, zum Abtransport von Wärmeenergie großflächig durch das Gusselement 8 strömen und insbesondere das im Gusselement 8 angeordnete Statorelement 4 großflächig umfließen kann. Das Gehäuseelement 2 ist hierbei im Wesentlichen zylinderförmig, wie insbesondere in Figur 1b dargestellt, ausgebildet und wird durch zwei Lagerschildelemente 14, welche jeweils mit den Stirnseiten 12 im montierten Zustand in Berührung stehen, abgeschlossen. Für eine Abdichtung des Innenraums des Gehäuseelementes 2 gegenüber dem Außenraum durch die Lagerschilde sind Elemente 20, beispielsweise umlaufende O-Ringe, in Figur 1b dargestellt. Die genaue Ausgestaltung des Anbringungsortes der Dichtelemente 20 ist jedoch der spezifischen Ausgestaltung eines Lagerschildes 14 geschuldet und in den Figuren 1a,b nur schematisch dargestellt.

Im Inneren des zylinderförmigen Gusselementes 6 ist Statorelement 4, beispielsweise als ein Lamellenpaket wie in Figur 1b dargestellt, ausgebildet. Die in Figur 1a zu sehenden Vertiefungen im Statorelement können nachfolgend eine Leiterwicklung zur Bestromung des Statorelementes aufnehmen. Diese Leiterwicklung kann insbesondere nach erfolgter Montage von Statorelement und Gusselement im Gehäuseelement angebracht werden. In Figur 1b ist nur ein Lagerschild 14, das untere Lagerschild 14, dargestellt, welches einen schematisch dargestellten Lagersitz 16 zur Aufnahme des nicht weiter dargestellten Rotorelementes bzw. dessen Welle, sowie eine Schraubverbindung 18 aufweist zur Befestigung des Lagerschildes am Gehäuseelement 2, beispielsweise durch entsprechende Schraubanschlüsse 18.

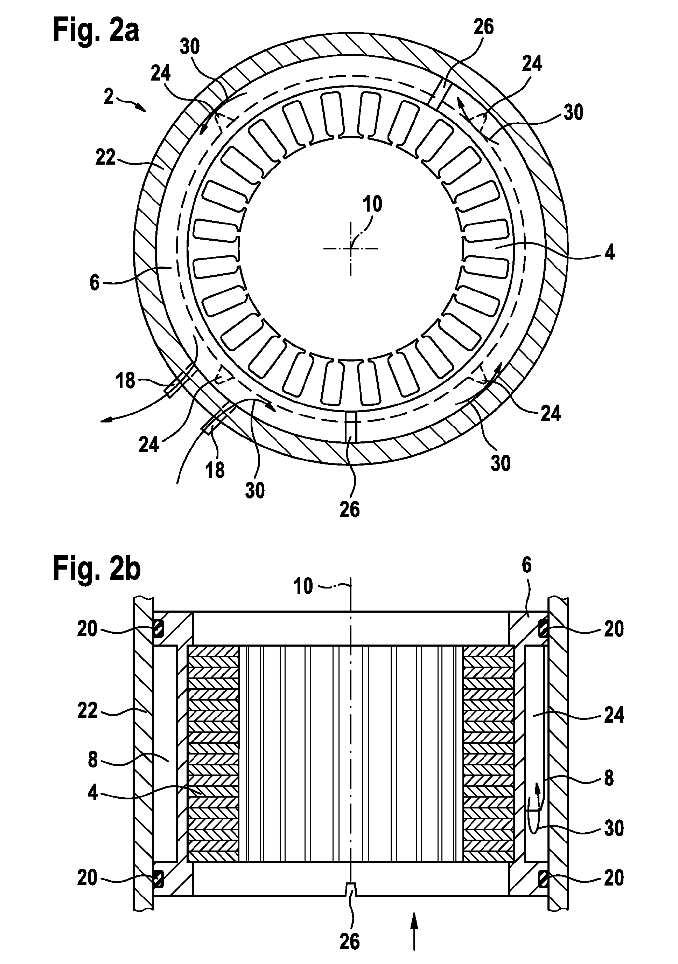

Weiter Bezug nehmend auf Figuren 2a,b wird eine weitere exemplarische Ausführungsform eines Gehäuseelementes gemäß der vorliegenden Erfindung dargestellt.

Die Ausgestaltung des Gehäuseelementes 2 in Figuren 2a,b entspricht dabei einer zweischaligen Ausführung. Das Gusselement 6 weist wiederum das mittig angegossene Statorelement 4 auf, ist jedoch nun massiv ausgebildet dergestalt, dass im Gusselement keine Kühlgeometrie vorgesehen ist. Vielmehr wird das Gusselement 6 in ein Mantelelement 22 eingebracht und gegenüber diesem wieder unter Verwendung von Dichtelementen 20 abgedichtet. Der Hohlraum zwischen dem Gusselement und dem Mantelelement 22 verwirklicht nun die Kühlgeometrie 8. In der Kühlgeometrie 8 können Stege 24 vorgesehen sein, gemäß Figur 2a exemplarisch vier Stege, welche derart ausgestaltet sind, dass zwischen dem Gusselement 6 und dem Mantelelement 22 zirkulierendes Kühlmittel bogenförmig oder mäanderförmig die Oberfläche des Gusselements umströmt, um hierbei Totzonen zu vermeiden.

In den Figuren 2a,b sind die Lagerschilde 14 nicht dargestellt, diese können geeignet an dem Gusselement 6, dem Mantelelement 22 oder an beiden Elementen fixiert, beispielsweise verschraubt werden. Auch können die Lagerschilde im Wesentlichen nur durch eine geeignete Schraubverbindung mit Schrauben, die über die Höhe des Gehäuseelementes 2 hinausgehend ausgebildet sind, miteinander verschraubt werden und das Gehäuseelement 2, bestehend aus Gusselement 6 sowie Mantelelement 22, zu verspannen. Um sicherzustellen, dass das Gusselement 6 und das Mantelelement 22 nicht gegeneinander verschiebbar bzw. verdrehbar sind, so dass der Antrieb eines Rotorelementes keine Gegenkraft dergestalt aufbringen kann, die das Gusselement 6 im Mantelelement 22 gegenläufig rotiert lassen würde, ist ein Orientierungselement 26 vorgesehen, welches geeignet beispielsweise in ein Lagerschild 14 eingreift und hierdurch eine Rotation des Gusselementes 6 relativ zum Mantelelement 22 zusammen mit dem Statorelement 4 wirksam unterbindet.

In Figur 2a dargestellt sind Anschlüsse 28, mittels welcher ein Kühlmittel 30 in den Zwischenraum zwischen Gusselement 6 und Mantelelement 22 einbringbar ist. Die exemplarische Fließrichtung des Kühlmittels 30 gemäß Figur 2a ist durch Pfeile dargestellt, wobei die Stege 24 alternierend umlaufen werden. Dieser alternierende Umlauf mag sich insbesondere bei jeweils einem Lagerschild 14 abwechseln. In Figur 2a sind exemplarisch vier Stege 24 vorgesehen, die genaue Ausgestaltung und Anzahl ist jedoch einer konkreten Implementierung geschuldet und damit variabel. Insbesondere wesentlich mehr als vier Stege 24, zum Beispiel acht oder zwölf, sind denkbar. Die Anzahl der Stege ist auch abhängig von der Dimensionierung des Gehäuseelementes 2 und damit der elektrischen Maschine und von einem spezifizierten Druckverlust des Kühlsystems, welcher insbesondere durch Kühlkanalquerschnitt und -länge beeinflusst wird.

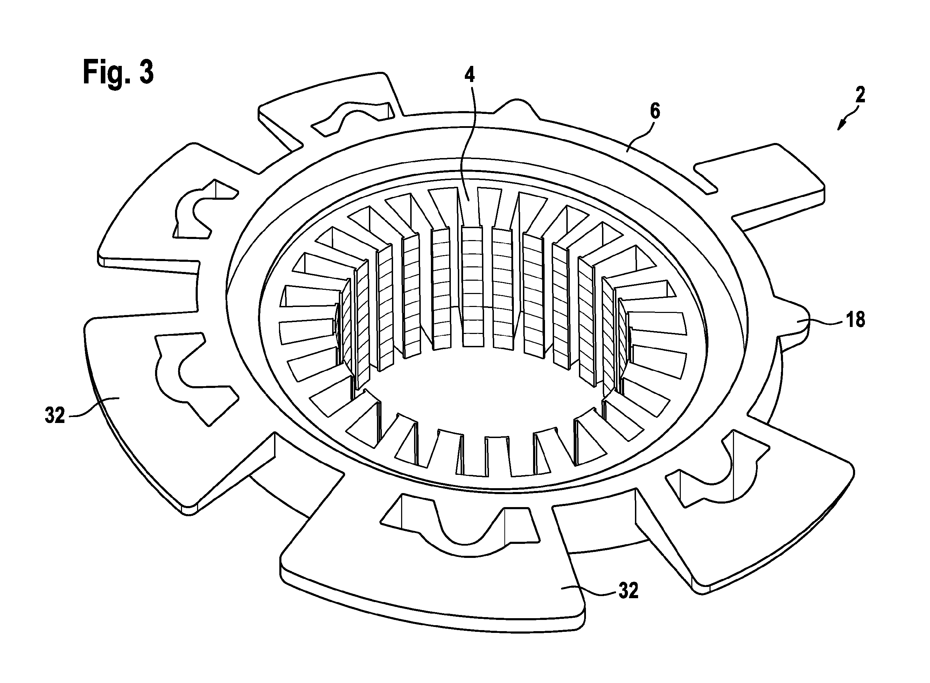

Weiter Bezug nehmend auf Figur 3 wird eine exemplarische Darstellung eines vergossenen Lamellenpaketes als Rohling gemäß der vorliegenden Erfindung dargestellt.

Figur 3 zeigt einen Rohling eines vergossenen Lamellenpaketes, somit eines Statorelementes 4 in einem Gusselement 6. Hierbei ist zu sehen, dass der Verguss und damit die Herstellung des Rohlings als ein erster Herstellungsschritt erfolgt und eine elektrische Maschine erst nachfolgend, insbesondere basierend auf dem Gehäuseelement aufgebaut wird. Angusselemente und Überlaufbohnen 32 sind in Figur 3 dargestellt und dem Herstellungsprozess, dem Gießverfahren, geschuldet.

Im Weiteren zu erkennen ist die Schraubverbindungen 18, welche als Laschen an der Gehäuseaußenseite des Gusselementes 6 ausgebildet sind. Eine möglicherweise vorzusehende Bohrung im Schraubverbindungselement 18 ist in Figur 3 noch nicht realisiert.

## Patentansprüche

1. Gehäuseelement (2) für eine elektrische Maschine für ein Fahrzeug, aufweisend
ein Statorelement (4); und
ein Gusselement (6);
wobei das Statorelement (4) zumindest teilweise innerhalb des Gusselementes (6) angeordnet ist;
**dadurch gekennzeichnet, dass**
das Statorelement (4) formschlüssig und thermisch leitend mit dem Gusselement (6) verbunden ist; und
wobei das Gusselement (6) eingerichtet ist mit einem Kühlmittel (30) kühlbar zu sein.

2. Gehäuseelement gemäß dem vorhergehenden Anspruch,
wobei das Gusselement (6) im Wesentlichen zylinderförmig ausgebildet ist, zwei Stirnseiten (12) sowie einen definierten Radius aufweist;
wobei das Statorelement (4) an der Innenseite des Gusselementes angeordnet ist; und
wobei an die Stirnseiten (12) Lagerschildelemente (14) anbringbar sind.

3. Gehäuseelement gemäß einem der vorhergehenden Ansprüche,
wobei das Gusselement (6) zumindest ein Kühlmittelleitelement (8) aufweist, ausgebildet im Gusselement (6).

4. Gehäuseelement gemäß einem der Ansprüche 1 bis 3,
wobei das Gusselement (6) in ein zylinderförmiges Mantelelement (22) einbringbar ist; und
zwischen Gusselement (6) und dem zylinderförmigen Mantelelement (22) zumindest ein Kühlmittelleitelement (8) ausgebildet ist.

5. Gehäuseelement gemäß einem der vorhergehenden Ansprüche,
wobei zumindest ein Dichtelement (20) zwischen Gusselement (6) und Lagerschildelement (14) und/oder zwischen Gusselement (6) und Mantelelement (22) vorgesehen ist.

6. Gehäuseelement gemäß einem der Ansprüche 3 bis 5,
wobei das Kühlmittelleitelement (8) mäanderförmig verlaufend bzw. alternierend das Gusselement (6) umlaufend ausgebildet ist.

7. Gehäuseelement gemäß einem der vorhergehenden Ansprüche,
wobei das Kühlmittel (30) als ein Kühlfluid, insbesondere als Kühlwasser, ausgebildet ist; und/oder
wobei das Gusselement (6) ausgebildet ist als ein Aluminiumgusselement;

8. Gehäuseelement gemäß einem der vorhergehenden Ansprüche,
wobei das Statorelement (4) ausgebildet ist als eine Mehrzahl an Lamellenelementen, insbesondere gestanzten Lamellenelementen, weiter insbesondere wobei die Mehrzahl an Lamellenelementen durch Stanzpaketierung verbunden sind.

9. Elektrische Maschine aufweisend ein Gehäuseelement (2) gemäß einem der vorhergehenden Ansprüche.

10. Fahrzeug, insbesondere Automobil, weiter insbesondere Elektro- oder Hybridfahrzeug, aufweisend eine elektrische Maschine gemäß Anspruch 9 und/oder ein Gehäuseelement (2) gemäß einem der Ansprüche 1 bis 8.
